(19)

Europäisches Patentamt
European Patent Office
Office européen des brevets

(11) **EP 2 614 385 B1**

(12) **FASCICULE DE BREVET EUROPEEN**

(45) Date de publication et mention
de la délivrance du brevet:
**25.06.2014 Bulletin 2014/26**

(21) Numéro de dépôt: **11748963.3**

(22) Date de dépôt: **30.08.2011**

(51) Int Cl.:
***G01S 19/20*** (2010.01)

(86) Numéro de dépôt international:
**PCT/EP2011/064891**

(87) Numéro de publication internationale:
**WO 2012/031940 (15.03.2012 Gazette 2012/11)**

(54) **PROCEDE ET DISPOSITIF DE DETECTION ET D'EXCLUSION DE PANNES SATELLITE MULTIPLES DANS UN SYSTEME GNSS**

VERFAHREN UND VORRICHTUNG FÜR DIE DETEKTION UND DEN AUSSCHLUSS MEHRERER SATELLITENAUSFÄLLE IN EINEM GNSS-SYSTEM

METHOD AND DEVICE FOR DETECTING AND EXCLUDING MULTIPLE SATELLITE FAILURES IN A GNSS SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.09.2010 FR 1057140**

(43) Date de publication de la demande:
**17.07.2013 Bulletin 2013/29**

(73) Titulaire: **Sagem Défense Sécurité**
**92100 Boulogne-Billancourt (FR)**

(72) Inventeur: **VOURC'H, Sébastien**
**F-75015 Paris (FR)**

(74) Mandataire: **Regimbeau**
**20, rue de Chazelles**
**75847 Paris Cedex 17 (FR)**

(56) Documents cités:
**EP-A1- 1 801 539     EP-A1- 1 956 386**
**EP-A1- 2 120 060**

- **YOUNG C LEE: "Analysis of Range and Position Comparison Methods as a Means to Provide GPS Integrity in the User Receiver", MITRE PAPER, 1 janvier 1986 (1986-01-01), XP055001228,**
- **PARKINSON B W ET AL: "AUTONOMOUS GPS INTEGRITY MONITORING USING THE PSEUDORANGE RESIDUAL", NAVIGATION, INSTITUTE OF NAVIGATION, FAIRFAX, VA, US, vol. 35, no. 2, 1 juin 1998 (1998-06-01), pages 255-274, XP008064597, ISSN: 0028-1522**
- **AUDREY GIREMUS AND ANNE-CHRISTINE ESCHER: "A GLR Algorithm to Detect and Exclude up to Two Simultaneous Range Failures in a GPS/Galileo/IRS Case", PROCEEDINGS OF THE 20TH INTERNATIONAL TECHNICAL MEETING OF THE SATELLITE DIVISION OF THE INSTITUTE OF NAVIGATION, ION GNSS 2007 : SEPT. 25 - 28, 2007, FORT WORTH CONVENTION CENTER, FORT WORTH, TEXAS, INST. OF NAVIGATION, FAIRFAX, VA, 25 septembre 2007 (2007-09-25), pages 2911-2923, XP002636755, cité dans la demande**

**Description**

DOMAINE DE L'INVENTION

Le domaine de l'invention est celui des porteurs utilisant des informations fournies par un système de navigation par satellites utilisant des mesures issues de plusieurs constellations de satellites.

L'invention concerne plus particulièrement un dispositif de positionnement par satellites et un procédé de contrôle d'intégrité d'informations de position délivrées par un tel dispositif, aptes à détecter et à exclure deux pannes satellites simultanées.

ARRIERE PLAN DE L'INVENTION

Les porteurs comme les aéronefs ou encore les bateaux disposent de nombreux systèmes de navigation. Parmi ces systèmes, on compte notamment un équipement hybride INS/GNSS (de l'anglo-saxon « Inertial Navigation System » et « Global Navigation Satellite System »).

Une centrale inertielle fournit des informations peu bruitées et précises à court terme. Cependant, sur le long terme, les performances en localisation d'une centrale inertielle se dégradent (plus ou moins vite en fonction de la qualité des capteurs, accéléromètres ou gyroscopes par exemple, et des traitements utilisés par la centrale). Si les informations acquises auprès d'un système de navigation par satellites sont quant à elles très peu susceptibles de dériver sur le long terme, elles sont cependant souvent bruitées et d'une précision variable. Par ailleurs, les mesures inertielles sont toujours disponibles alors que les informations GNSS ne le sont pas ou sont susceptibles d'être leurrées et brouillées.

L'hybridation consiste à combiner les informations fournies par la centrale inertielle et les mesures fournies par le système de navigation par satellites pour obtenir des informations de position et de vitesse en tirant avantage des deux systèmes. Ainsi, la précision des mesures fournies par le récepteur GNSS permet de maîtriser la dérive inertielle et les mesures inertielles peu bruitées permettent de filtrer le bruit sur les mesures du récepteur GNSS.

Le modèle des mesures GNSS qui est connu ne tient pas compte des éventuelles pannes satellites qui affectent les horloges ou les éphémérides transmises, ces pannes se manifestant généralement sous la forme de biais ou de dérives sur les mesures GNSS.

Dans ce cadre, des systèmes de contrôle d'intégrité ont pour but de détecter l'apparition de ces pannes et d'exclure les satellites responsables afin de retrouver une solution de navigation ne contenant plus d'erreur non détectée.

Dans les systèmes de navigation hybride INS/GNSS, la probabilité de défaillance de deux satellites dans une même constellation est inférieure au risque d'intégrité. Cet événement peut alors être imputé au risque d'intégrité et le système ne nécessite qu'une capacité à détecter une seule panne satellite. Le satellite identifié comme étant en panne peut alors être exclu de manière à supprimer la pollution de l'état de navigation par la panne satellite.

La multiplication des constellations de satellites dédiés à la navigation (GPS, Galileo, Glonass par exemple) augmente le nombre de satellites pouvant être utilisés dans un système de navigation hybride INS/GNSS. Mais alors, la probabilité de rencontrer deux pannes satellites simultanées ne sera plus négligeable devant le risque d'intégrité.

Ainsi, les futurs systèmes de navigation, qui demanderont des exigences d'intégrité supérieures, seront contraints d'avoir la capacité de détecter et d'exclure plus d'une panne satellite.

Or les techniques actuelles de contrôle d'intégrité ne permettent la détection que d'une seule panne satellite. Et ces techniques ne peuvent être étendues au cas double panne sans nécessiter une charge de calcul élevée.

L'article « A GLR Algorithm to Detect and Exclude up to Two Simultaneous Range Failures in a GPS/Galileo/IRS Case" de A. Gerimus et A.C Escher, ION GNSS 2007, expose l'utilisation d'une méthode de détection et d'exclusion de pannes satellites multiples reposant sur l'algorithme GLR (« Generalized Likehood Ratio », test du rapport de vraisemblance) pour détecter deux pannes satellites. Un inconvénient principal de cette méthode réside dans le fait qu'elle n'utilise qu'un seul filtre de navigation et qu'elle va commencer par détecter le satellite qui présente la panne la plus importante avant de pouvoir détecter le deuxième satellite en panne, dès lors on observera des erreurs importantes sur la solution de navigation. De plus, cette méthode ne permet pas de supprimer la pollution de l'état de navigation par la première panne satellite, ce qui impacte nécessairement la capacité du système à détecter la deuxième panne satellite.

EP 1801539 A1 décrit un procédé de contrôle d'intégrité GNSS par un banc de filtres de Kalman élaborant chacun une solution de navigation à partir de mesures brutes de signaux émis par des satellites, dans lequel la solution de navigation élaborée par les filtres sont corrigées en fonction d'une estimation de l'impact d'une panne d'un satellite sur la solution de navigation.

BREVE DESCRIPTION DE L'INVENTION

Il existe donc un besoin pour une technique pouvant être mise en oeuvre avec une charge de calcul réduite qui permette de détecter et d'exclure efficacement des pannes satellites multiples, et de corriger l'impact des pannes sur la solution de navigation.

A cet effet, l'invention propose selon un premier aspect un procédé de contrôle d'intégrité d'informations de position délivrées par un dispositif de positionnement par satellites comprenant un banc de filtres de Kalman élaborant chacun une solution de navigation à partir de mesures brutes de signaux émis par des satellites, caractérisé en ce qu'il comporte les étapes consistant, pour chaque filtre du banc, à :

- (i) corriger la solution de navigation élaborée par le filtre en fonction d'une estimation de l'impact d'une panne d'un satellite sur la solution de navigation ;
- (ii) calculer une innovation croisée reflétant l'écart entre une observation correspondant à une mesure brute issue d'un satellite non utilisée par le filtre et une estimation a posteriori de ladite observation issue de la solution de navigation élaborée par le filtre et corrigée conformément à l'étape (i) ;
- (iii) réaliser un test statistique de l'innovation croisée pour déclarer si le satellite dont la mesure brute n'est pas utilisée par le filtre est ou non défaillant.

Certains aspects préférés, mais non limitatifs, de ce procédé sont les suivants :

- l'étape (i) comprend :

    ◦ la détermination, pour chaque satellite, d'au moins un rapport de vraisemblance entre une hypothèse de panne d'une nature donnée du satellite et une hypothèse d'absence de panne du satellite ;
    ◦ la comparaison du rapport de vraisemblance associé à une panne de nature donnée à une valeur seuil, et la déclaration le cas échéant d'une panne de nature donnée ;
    ◦ une estimation de l'impact de la panne déclarée sur la solution de navigation élaborée par le filtre;
    ◦ la correction de la solution de navigation élaborée par le filtre en fonction de l'estimation de l'impact de la panne déclarée.

- il comprend le calcul, pour chaque satellite, d'une innovation croisée et d'une covariance d'innovation croisée reflétant l'écart entre une observation correspondant à une mesure brute issue du satellite et une estimation a posteriori de ladite observation élaborée par un filtre de Kalman n'utilisant pas la mesure brute issue du satellite, le rapport de vraisemblance étant déterminé en fonction de l'innovation croisée et de la covariance d'innovation croisée fournies par ledit filtre de Kalman n'utilisant pas la mesure brute issue du satellite et à partir d'une estimation de l'impact de la panne de nature donnée sur ladite innovation croisée.
- l'impact de la panne de nature donnée sur ladite innovation croisée est estimé par détermination, à partir de données fournies par ledit filtre de Kalman n'utilisant pas la mesure brute issue du satellite, d'une matrice dynamique d'innovation, et par estimation d'une amplitude de la panne de nature donnée sur une fenêtre glissante d'estimation correspondant à un nombre donné d'incrémentations dudit filtre de Kalman n'utilisant pas la

mesure brute issue du satellite, la matrice dynamique d'innovation représentant un lien entre l'amplitude de la panne et l'écart induit par la panne sur l'innovation croisée ;

- l'impact d'une panne sur une solution de navigation est estimé par détermination, à partir de données fournies par le filtre de Kalman élaborant la solution de navigation, d'une matrice dynamique de navigation, et par estimation d'une amplitude et d'une covariance de la panne sur une fenêtre glissante d'estimation correspondant à un nombre donné d'incrémentations dudit filtre de Kalman élaborant la solution de navigation, la matrice dynamique de navigation représentant un lien entre l'amplitude de la panne et l'écart induit par la panne sur ladite solution de navigation ;
- le test statistique réalisé à l'étape (iii) déclare un satellite comme étant défaillant lorsque l'innovation croisée excède un seuil correspondant à $(H.P_i.H^T + R_i)^*\alpha$, où H représente la matrice d'observation du filtre de Kalman, $P_i$ la matrice d'estimation a posteriori de la covariance de l'erreur, $R_i$ la matrice de covariance du bruit de mesure, et $\alpha$ un coefficient dont la valeur est fixée en fonction d'une probabilité de fausse détection ;
- l'innovation croisée correspond à l'écart entre la pseudo-distance à un satellite délivrée par le système de positionnement par satellites et une estimation a posteriori de cette pseudo-distance fournie par un filtre de Kalman n'utilisant pas la pseudo-distance délivrée par le satellite ;
- il comprend en outre les étapes consistant à :

    ◦ invalider un satellite déclaré comme étant défaillant pour que les mesures brutes dudit satellite défaillant ne soient plus utilisées par les filtres du banc,
    ◦ exclure le satellite invalidé si à l'expiration d'un délai prédéterminé suite à l'invalidation le test statistique de l'innovation croisée conclut toujours à la défaillance dudit satellite et aucun autre test d'innovation croisée n'a déclaré la défaillance d'un autre satellite.

- il met également en oeuvre, pour chaque filtre du banc, un test statistique de l'innovation a priori de chacun des satellites utilisés par le filtre, et dans le cas où plusieurs satellites sont déclarés comme étant défaillants suite au test statistique de leur innovation croisée, on invalide le satellite non utilisé par le filtre ayant le plus grand nombre d'innovations a priori dont le test statistique est inférieur à un seuil de sorte que la mesure brute dudit satellite invalidé ne soit plus utilisée par les filtres du banc ;
- chacun des filtres du banc élabore une solution de navigation en venant hybrider des mesures inertielles aux mesures brutes des signaux émis par les satellites.

Selon un second aspect, l'invention propose un dispositif de positionnement par satellites comprenant un banc de filtres de Kalman élaborant chacun une solution de navigation à partir de mesures brutes de signaux émis par des satellites, caractérisé en ce qu'il comporte :

- un module d'accommodation configuré pour estimer, pour chaque filtre du banc, l'impact d'une panne d'un satellite sur la solution de navigation élaborée par le filtre, et à corriger, en cas de déclaration de panne, la solution de navigation en fonction de l'estimation de l'impact de la panne ;
- un module de détection de pannes satellites configuré pour

  ∘ calculer, pour chaque filtre du banc, une innovation croisée reflétant l'écart entre une observation correspondant à une mesure brute issue d'un satellite non utilisée par le filtre et une estimation a posteriori de ladite observation issue de la solution de navigation élaborée par le filtre de Kalman telle que corrigée par le module d'accommodation, et
  ∘ réaliser un test statistique de l'innovation croisée pour déclarer si le satellite est ou non défaillant.

BREVE DESCRIPTION DES DESSINS

D'autres aspects, buts et avantages de la présente invention apparaîtront mieux à la lecture de la description détaillée suivante de formes de réalisation préférées de celle-ci, donnée à titre d'exemple non limitatif, et faite en référence aux dessins annexés sur lesquels :

- la figure 1 est un schéma illustrant le principe de fonctionnement de l'invention dans le cas où deux satellites parmi quatre sont simultanément en panne ;
- la figure 2 est un schéma représentant un mode de réalisation possible d'un dispositif conforme au second aspect de l'invention.

DESCRIPTION DETAILLEE DE L'INVENTION

Dans le cadre de l'invention, on définit un satellite en panne comme étant un satellite qui envoie des informations erronées dans son message, conduisant à un écart (fixe ou variable) entre sa position réelle et la position donnée dans son message.

Selon l'état de l'art, un banc de filtres de Kalman est classiquement utilisé pour se protéger contre la panne éventuelle d'un satellite. Dans un contexte INS/GNSS, ces filtres réalisent l'hybridation entre les informations issues du système de navigation par satellite et celles issues de la centrale inertielle. Un des filtres du banc de filtres, désigné par le terme de filtre principal, utilise toutes les mesures GNSS constituées de pseudo-mesures et d'informations sur la qualité de celles-ci. Les autres filtres, dit secondaires, du banc de filtres ne font usage que d'une partie seulement des mesures GNSS disponibles (typiquement toutes les mesures GNNS à l'exception de celles provenant de l'un des satellites ; le satellite exclu étant différent d'un filtre secondaire à l'autre).

Dans le cadre de l'invention, une telle architecture sous la forme d'un banc de filtres présente les avantages suivants.

Si une panne satellite survient, celle-ci n'est pas vue par le filtre secondaire ne recevant pas cette mesure : ce filtre secondaire n'est donc pas affecté par la panne et reste ainsi non pollué.

Par ailleurs, si deux pannes satellites simultanées surviennent, deux des filtres secondaires du banc (ceux excluant les mesures issues de l'un ou l'autre des satellites en panne) sont alors affectés par une seule panne satellite.

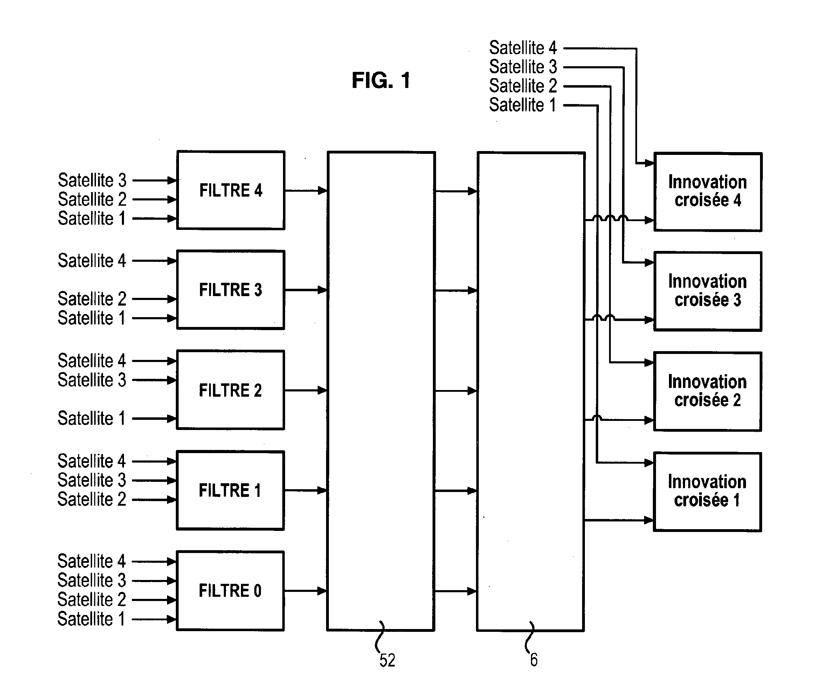

On a représenté sur la figure 1, un banc de filtres de Kalman comprenant un filtre principal FILTRE 0 utilisant les mesures issues de quatre satellites, et quatre filtres secondaires FILTRE 1, FILTRE 2, FILTRE 3 et FILTRE 4 excluant chacun les mesures issues de l'un des satellites. Prenant l'hypothèse que les satellites 1 et 4 sont simultanément en panne, on comprend que les filtres secondaires FILTRE 1 et FILTRE 4 ne sont affectés que par une seule panne satellite (respectivement celle due au satellite 4 et celle due au satellite 1).

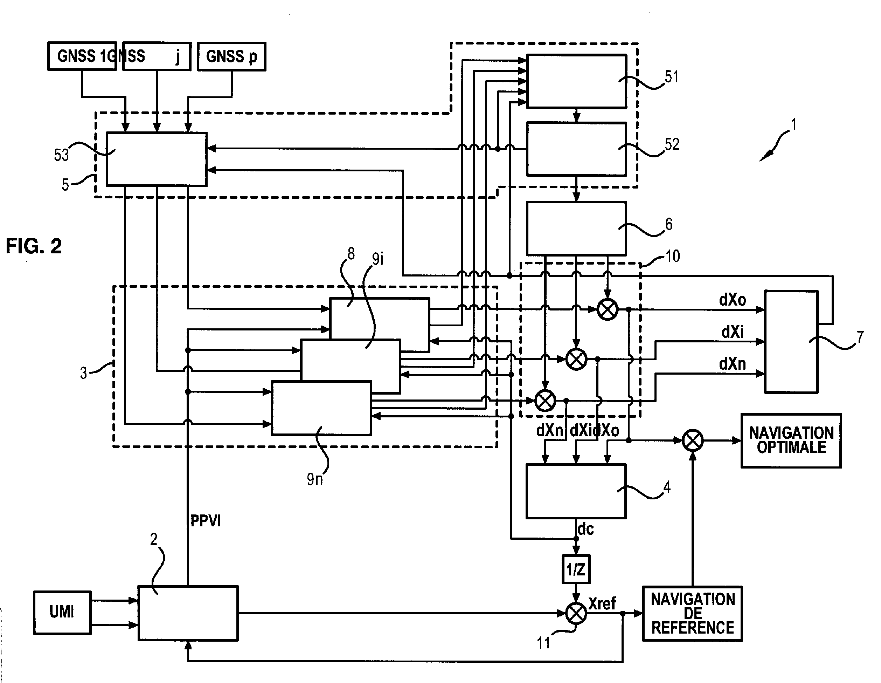

En référence à la figure 2, on a représenté un dispositif de positionnement par satellites 1 conforme à un mode de réalisation possible du second aspect de l'invention, destiné à être embarqué au sein d'un porteur tel qu'un aéronef. Le dispositif 1 utilise des informations fournies par une centrale inertielle UMI et par plusieurs systèmes de navigation par satellites GNSS 1, GNNS j, GNSS p, et comprend une seule plateforme virtuelle 2 et un banc 3 de filtres de Kalman. L'invention n'est toutefois pas limitée à un système de navigation INS/GNSS mais s'étend également à un contexte GNSS seul.

La plateforme virtuelle 2 reçoit des incréments inertiels provenant des capteurs (gyroscopes, accéléromètres) de la centrale inertielle UMI. Les incréments inertiels correspondent notamment à des incréments angulaires et à des incréments de vitesse. Des informations de navigation inertielle (comme les attitudes, le cap, la vitesse ou la position du porteur) sont calculées par la plateforme virtuelle 2 à partir de ces incréments. Ces informations de navigation inertielle sont désignées mesures inertielles PPVI par la suite.

Ces mesures inertielles PPVI sont transmises à un dispositif de calcul des pseudo-distances estimées a priori (non représenté sur la figure 1) qui reçoit également des données sur la position des satellites. A partir d'une part des mesures inertielles et d'autres par des données sur la position des satellites, le dispositif de calcul des pseudo-distances estimées a priori calcule les pseudo-distances a priori entre le porteur et les différents satellites visibles du porteur.

Le dispositif 1 reçoit également des pseudo-mesures entre le porteur et les différents satellites visibles issus de plusieurs constellations GNSS 1, GNSS j, GNSS p. On calcule alors classiquement les écarts (appelées observations) entre les pseudo-mesures estimées a priori et les pseudo-mesures délivrées par chacune des constellations GNSS.

Le banc de filtres de Kalman 3 réalise l'hybridation entre les informations inertielles provenant de la centrale inertielle 2 et les informations des systèmes de navigation par satellites. Outre une fonction de fourniture d'informations statistiques sur les mesures en sortie, le rôle des filtres est de maintenir la plateforme virtuelle 2 dans un domaine de fonctionnement linéaire image de celui modélisé dans le filtre de Kalman en estimant chacun un vecteur d'états $dX0$-$dXn$ (comportant en règle générale de l'ordre de 30 composantes).

De manière classiquement connue en soi, le banc de filtres 3 comporte plusieurs filtres de Kalman en parallèle. Un des filtres est appelé filtre de Kalman principal 8 : il prend en compte toutes les observations (et reçoit pour ce faire toutes les mesures issues du système GNSS) et élabore une solution de navigation hybride principale.

Les autres filtres $9i$, $9n$ sont appelées filtres secondaires : ils ne prennent en compte qu'une partie des observations, par exemple $(n-1)$ observations parmi les $n$ observations relatives aux $n$ satellites visibles de sorte que le $i$-ème filtre de Kalman secondaire $9i$ reçoit du système GNSS les mesures de tous les satellites sauf du $i$-ème, et élaborent chacun une solution de navigation hybride secondaire.

On relèvera que le processus d'élaboration des observations décrit ci-dessus n'est pas commun à tous les filtres du banc 3, mais est réalisé pour chacun des filtres. Ainsi, le calcul des pseudo-distances a priori et le calcul des observations qui sont évoqués ci-dessus ne sont pas communs à tous les filtres du banc, mais le dispositif d'hybridation 1 conforme à l'invention réalise ces calculs pour chaque filtre du banc.

Le dispositif 1 élabore une sortie hybride Xref (« Navigation de référence ») correspondant aux mesures inertielles PPVI calculées par la plateforme virtuelle 2 et corrigées, via un soustracteur 11, par un vecteur de stabilisation dC présentant autant de composantes que les vecteurs d'états estimés par les filtres de Kalman.

On relèvera que dans le cadre d'un dispositif d'hybridation en boucle fermée, la sortie hybride Xref est rebouclée à l'entrée de la plateforme virtuelle 2.

Par ailleurs, comme cela est représenté sur la figure 1, le vecteur de stabilisation dC peut être appliqué à l'entrée de l'ensemble des filtres du banc de filtres. De telle manière, les filtres de Kalman s'ajustent en soustrayant à leur estimation (vecteur d'états dX) la correction dC, et sont ainsi maintenus cohérents de la plateforme virtuelle.

Le dispositif 1 comporte en outre un module 4 d'élaboration du vecteur de stabilisation dC dont deux modes de réalisation sont indiqués ci-après à titre d'exemples non limitatifs.

Selon un premier mode de réalisation possible, les corrections à appliquer aux mesures inertielles sont issues d'un seul filtre. Ainsi, le vecteur de stabilisation dC est égal, dans toutes ses composantes, au vecteur d'états estimé par un filtre de Kalman sélectionné parmi les filtres du banc 3. La sélection s'opère par exemple au sein du module 4 conformément au document EP1801539 A par détection d'une éventuelle panne satellite.

Selon un second mode de réalisation possible, le vecteur de stabilisation dC est élaboré composante par composante, en utilisant pour chaque composante l'ensemble des filtres de Kalman. Le module 4 d'élaboration de la correction dC est alors configuré pour élaborer chacune des composantes $dC[état]$ du vecteur de stabilisation dC en fonction de l'ensemble des composantes correspondantes $dX0[état]$-$dXn[état]$ des vecteurs de correction $dX0$-$dXn$. L'élaboration de chacune des composantes s'opère par exemple conformément à la demande de brevet WO2010070012 au nom de la Demanderesse.

Le dispositif 1 comporte par ailleurs un module 5 de correction de l'état de navigation comprenant un module 52 de détection configuré de manière à mettre en oeuvre les étapes de :

- détermination, pour chaque satellite, d'au moins un rapport Ir, Ir' de vraisemblance entre une hypothèse de panne d'une nature donnée du satellite et une hypothèse d'absence de panne du satellite,
- déclaration, d'une panne de nature donnée sur un satellite en fonction du rapport Ir, Ir' de vraisemblance associé à cette panne et d'une valeur seuil.

Avantageusement, pour chaque satellite, au moins un rapport Ir, Ir' de vraisemblance est déterminé à chaque incrémentation du filtre de Kalman sur une fenêtre glissante de stockage, et une panne de nature donnée est déclarée si la somme des rapports de vraisemblance Ir, Ir' associés à cette panne sur la fenêtre glissante de stockage est supérieure à la valeur seuil associée.

Un rapport de vraisemblance est représentatif de la probabilité que la panne de nature donnée qui lui est associée affecte le satellite correspondant. Par exemple, si un rapport de vraisemblance associé à une panne de nature donnée est positif, il est plus probable que ladite panne affecte le satellite correspondant. Plus un rapport de vraisemblance est élevé, plus la probabilité est grande que son satellite correspondant soit corrompu par la panne qui lui est associé.

La valeur seuil peut être la même pour plusieurs satellites et/ou pour plusieurs natures de panne, ou bien les valeurs seuils peuvent être différentes pour chaque satellite et pour chaque nature de panne, auquel cas chaque rapport de vraisemblance, ou avantageusement chaque somme de rapports de vraisemblance, est comparé à une valeur seuil qui lui est propre.

La taille de la fenêtre glissante de stockage peut varier en fonction de la nature de la panne, ou bien une seule taille de fenêtre glissante peut être prévue.

Comme cela sera détaillé par la suite, le module 5 de détection et d'exclusion de pannes satellites met également en oeuvre une fonction de gestion et d'exclusion des mesures GNSS pour les surveiller. Dans le mode de réalisation représenté sur la figure 1, le module 5 de détection et d'exclusion comprend ainsi un module 53 de gestion des signaux satellites qui reçoit les mesures GNSS et route ces informations vers les différents filtres du banc 3 en fonction des circonstances (aucun satellite détecté comme étant défaillant ; exclusion d'un satellite détecté comme étant défaillant). Comme cela sera détaillé par la suite, le module 5 de détection et d'exclusion peut également exploiter pour ce faire les résultats des tests d'innovations croisées élaborées par un module 7 de détection de pannes satellites, et les résultats des tests élaborés par un module de détection 52.

Le module 53 de gestion des signaux satellites met avantageusement en oeuvre une présélection des mesures GNSS à utiliser, à même d'optimiser la performance du système et de limiter de nombre de mesures. En effet même si l'utilisation de toutes les mesures permet d'obtenir une performance optimale, la sélection de n mesures (où n correspond au nombre de filtres secondaires utilisant chacun n-1 mesures GNSS) dans les constellations GPS, Galileo, Glonass, etc. minimisant différents critères de précision (tels que DOP - « Dilution Of Precision »-, EHE - « Expected Vertical Error »- ou EVE—« Expected Vertical Error »- par exemple) permet d'obtenir des performances en sortie meilleures que si on utilisait une seule constellation et suffisantes pour assurer la mission choisie.

Le dispositif 1 comprend également un module 6 d'accommodation configuré pour mettre en oeuvre, pour chaque filtre du banc, les étapes de :

- estimation de l'impact d'une panne d'un satellite sur la solution de navigation hybride élaborée par le filtre, et
- si une panne est déclarée, correction de la solution de navigation en fonction de l'estimation de l'impact de la panne.

Le module 6 d'accommodation a ainsi pour fonction d'évaluer les écarts $\Delta X$, $\Delta X_i$,..., $\Delta X_n$ induits par une panne sur les solutions de navigation hybride élaborées par les filtres de Kalman 8, 9i...9n et de corriger les solutions de navigation hybride, par exemple à l'aide d'un banc de soustracteurs 10. L'invention n'est cependant pas limitée à l'architecture représentée sur la figure 1, l'estimation de l'impact de la panne sur les solutions de navigation hybride pouvant être réalisée de manière alternative par les filtres de Kalman, par le module 52 de détection, ou encore par tout autre moyen adapté connu de l'homme de l'art.

On relèvera que les modules 5 et 6 sont conformes à ceux décrits dans la demande de brevet déposée en France le 10 Juillet 2009 sous le n° 0954849 au nom de la Demanderesse.

On décrit ci-après des méthodes de calcul développées par la Demanderesse et déjà exposées dans cette demande de brevet FR 0954849 pour déterminer les rapports de vraisemblance et l'impact d'une panne sur la solution de navigation hybride. Ces formules sont données à titre illustratif et ne constituent en rien une limitation de l'invention.

Avantageusement, les rapports de vraisemblance sont déterminés en fonction de données fournies par les filtres de Kalman comprenant en particulier des innovations et des covariances d'innovation, et à partir d'une estimation de l'impact de la panne de nature donnée sur les innovations.

On entend par innovation un écart entre une observation a priori par un filtre de Kalman et une estimation a posteriori de cette observation élaborée par le filtres.

Chaque filtre délivre donc n innovations, autant que de satellites dans la constellation.

On appelle en particulier « innovation croisée » l'innovation fournie par chaque filtre de Kalman secondaire 8i représentant l'écart entre une observation a priori en provenance du satellite dont le filtre secondaire 8i ne reçoit pas les données et une estimation a posteriori de cette observation. Le banc de filtres de Kalman délivre ainsi n*(n+1) innovations, dont n sont des innovations croisées.

Avantageusement, le module 5 de détection et d'exclusion de pannes satellites comprend un module 51 de sélection d'innovations configuré de manière à sélectionner les innovations (croisées ou non) et les covariances d'innovation et les router vers le module 52 calculant les rapports de vraisemblance.

Avantageusement, le module 51 est configuré pour transmettre les innovations croisées, ou les innovations classiques, au module 52 pour le calcul des rapports de vraisemblance. L'avantage d'utiliser une innovation croisée, par rapport aux tests d'innovation classiques est que le filtre qui permet de tester un satellite en panne n'est pas perturbé par la panne.

En particulier, le i-ème filtre de Kalman secondaire 9i reçoit du système GNSS les mesures de tous les satellites sauf du i-ème, et élabore ainsi le vecteur d'états dXi de manière indépendante du satellite i, de sorte que ce filtre 8i n'est pas perturbé par une éventuelle panne affectant le satellite i.

L'innovation croisée d'un satellite correspond par exemple à l'écart entre la pseudo-distance audit satellite délivrée par le système de positionnement par satellites et une estimation a posteriori de cette pseudo-distance fournie par un filtre de Kalman n'utilisant pas la pseudo-distance délivrée par le satellite, de sorte que cette estimation est indépendante du satellite. Le calcul du rapport de vraisemblance ne sera donc pas perturbé par une panne, et notamment par une panne lente, du satellite.

On précise ici que l'innovation croisée peut d'une manière générale être appliquée à n'importe quelle mesure brute, par exemple à une mesure de pseudo-vitesse (également appelée mesure doppler).

Préférentiellement, le rapport de vraisemblance lr associé à une panne de nature donnée est déterminé, à un instant t donné, pour chaque satellite, par la formule suivante :

$$ lr_t = \varepsilon_t^{\,T} S_t^{\,-1} \varepsilon_t - (\varepsilon_t - \rho_t)^T S_t^{\,-1} (\varepsilon_t - \rho_t) $$

dans laquelle :

- $\varepsilon_t$ représente une innovation (classique ou avantageusement croisée) d'un filtre de Kalman 8i à l'instant t
- $S_t$ représente la covariance de l'innovation à l'instant t, et
- $\rho_t$ représente l'écart dû à la panne sur ladite innovation à l'instant t.
- $T$ représente la transposition d'une matrice ou d'un vecteur colonne.
- $\rho_t$ est inconnu, mais on peut l'estimer sur une fenêtre glissante d'estimation.

Préférentiellement, on estime en parallèle l'écart dû à la panne sur la solution hybride de navigation élaborée par ledit filtre de Kalman, écart que l'on notera $\beta_t$ dans la suite. Ces estimations peuvent être mises en oeuvre selon les formules suivantes :

$$ \rho_t = \varphi_t^{\,T} \hat{\upsilon}_t $$

$$ \beta_t = \mu_t^{\,T} \hat{\upsilon}_t $$

dans lesquelles :

- $\hat{\upsilon}_t$ est une estimation de l'amplitude de la panne,
- $\varphi_t$ est une matrice dynamique d'innovation, représentant un lien entre l'amplitude de la panne et l'écart induit par la panne sur l'innovation, et
- $\mu_t$ est une matrice dynamique de navigation, représentant un lien entre l'amplitude de la panne et l'écart induit par la panne sur la solution hybride de navigation.

Les deux matrice dynamiques à l'instant t sont avantageusement calculées par le module 52 de détection à partir de données fournies par ledit filtre de Kalman, préférentiellement de manière récursive croisée, c'est-à-dire que, pour tout instant t, $\varphi_t$ et $\mu_t$, sont calculées en fonction de $\varphi_{t-1}$ et $\mu_{t-1}$.

Lesdites données fournies par le filtre de Kalman peuvent comprendre un gain de Kalman, et des matrices de transition et d'observation.

L'estimation de l'amplitude de la panne est avantageusement effectuée sur une fenêtre glissante d'estimation correspondant à un nombre donné N d'incrémentations du filtre de Kalman.

Selon une variante avantageuse, l'estimation peut être réalisée par une estimation aux moindres carrés sur la fenêtre glissante d'estimation, préférentiellement par la formule suivante :

$$\hat{\upsilon}_t = (\sum_{i=t-N+1}^{t} \varphi_i S_i^{-1} \varphi_i^{T})^{-1}.(\sum_{i=t-N+1}^{t} \varphi_i S_i^{-1} \varepsilon_i)$$

Avantageusement, le nombre donné N d'incrémentations du filtre de Kalman correspond à une durée inférieure à un délai de détection T prédéterminé. En particulier, en notant $\delta$ la période d'incrémentation du filtre de Kalman, la fenêtre glissante d'estimation doit vérifier : $N.\delta \leq T$.

Cette fenêtre glissante d'estimation est avantageusement la même que la fenêtre de stockage des rapports de vraisemblance associée à la panne.

Ce délai de détection permet de contraindre la taille de la fenêtre glissante d'estimation et ainsi de limiter la charge de calcul.

Si un satellite est déclaré en panne, l'estimation des écarts évalués par le module 6 à l'instant t sur la solution de navigation hybride élaborée par chaque filtre de Kalman 8i est :

$$\Delta X_i = \beta_t = \mu_t^{T} \hat{\upsilon}_t$$

où $\beta_t$ a été calculé à partir de l'innovation utilisant une observation a priori du satellite déclaré en panne. Le module 51 de sélection d'innovations est avantageusement configuré de telle sorte que, dans ce cas, seules ces innovations sont fournies au module 52 de détection et au module 6 d'accommodation. Ainsi, la sélection d'innovation permet d'estimer l'impact d'une panne détectée à partir des innovations utilisant des informations fournies par le satellite déclaré en panne.

Par ailleurs, l'écart sur la covariance $P_i$ de l'erreur associée à la solution de navigation hybride élaborée par le filtre de Kalman 8i est également estimé par la formule suivante :

$$\Delta P_i = \mu_t^{T} \hat{P}_t \mu_t$$

où $\hat{P}_t$ est la covariance du défaut estimé à l'instant t $\hat{\upsilon}_t$.

Préférentiellement, le module 52 de détection est apte à stocker les rapports de vraisemblance de chaque satellite et pour chaque panne de nature donnée sur la fenêtre glissante de stockage. Les estimations de l'impact de la panne sur les solutions de navigation hybrides fournies par les filtres sont retirées au niveau du banc de soustracteurs 10.

Selon une variante avantageuse, deux rapports lr, lr' de vraisemblance sont déterminés pour chaque satellite, un rapport lr étant associé à une hypothèse de panne de nature biais et l'autre rapport lr' étant associé à une hypothèse de panne de nature rampe.

En particulier, la matrice dynamique d'innovation déterminée pour chaque incrémentation d'un filtre de Kalman est différente pour une panne de nature biais ou rampe. Pour chaque satellite, les deux rapports lr, lr' de vraisemblance sont donc différents.

L'invention permet ainsi de différencier l'occurrence d'une panne de nature biais ou bien d'une panne de nature rampe.

Si une panne de nature biais est détectée, l'étape d'estimation de l'impact de la panne sur la solution de navigation hybride est avantageusement réalisée sur une fenêtre glissante d'estimation à partir de l'instant de déclaration de la panne de nature biais. Ainsi, si une panne de type biais est détectée, on laisse active la fenêtre glissante d'estimation pendant un temps déterminé, suffisant pour estimer les caractéristiques de la panne.

Avantageusement, l'estimation des caractéristiques de la panne de type biais est fonction de l'instant d'apparition de la panne, c'est-à-dire de l'instant où la somme des rapports de vraisemblance associée à la panne de type biais a dépassé sa valeur seuil associée. L'exclusion des mesures par le module 53 n'est alors implémentée qu'après cette estimation.

Si une panne de type rampe est détectée, l'estimation de l'impact de la panne sur la solution de navigation hybride est préférentiellement réalisée sur la fenêtre glissante d'estimation précédent l'instant de déclaration de la panne de nature rampe.

Avantageusement, si plusieurs sommes de rapports lr, lr' de vraisemblance sont supérieures à leur valeur seuil associée, une seule panne est déclarée par le module 52 de détection. Cette panne correspond à la plus grande des sommes de rapports de vraisemblance pour l'ensemble des pannes envisagées sur l'ensemble des satellites.

Ainsi, si deux satellites sont susceptibles d'être déclarés en panne, seule la panne la plus probable est effectivement déclarée et si deux pannes de nature différentes sont susceptibles d'être déclarées, seule la panne la plus probable est effectivement déclarée.

Reprenant l'hypothèse que les satellites 1 et 4 sont simultanément chacun affecté par une panne, on a pu voir que les filtres secondaires FILTRE 1 et FILTRE 4 excluant les mesures issues de l'un de ses satellites 1 et 4 sont uniquement affectées par une seule panne satellite. Dès lors, la solution de navigation hybride élaborée par chacun de ces filtres est corrigée comme indiqué précédemment de l'impact de l'unique panne satellite les affectant. On obtient ainsi une solution de navigation saine pour ces deux filtres affectés par une seule panne satellite.

Le dispositif 1 comporte en outre un module 7 de détection et d'exclusion de pannes satellites configuré de manière à mettre en oeuvre les étapes consistant à :

- calculer, pour chaque filtre du banc, une innovation croisée reflétant l'écart entre une observation correspondant à une mesure brute issue d'un satellite non utilisée par le filtre et une estimation a posteriori de ladite observation issue de la solution de navigation élaborée par le filtre et corrigée par le module d'accommodation 6 via le soustracteur 10, de sorte que cette estimation est indépendante du satellite que l'on souhaite tester,
- réaliser un test statistique de l'innovation croisée pour déclarer si le satellite est ou non défaillant.

On relèvera que ce module 7 est conforme à celui décrit dans la demande de brevet déposée en France le 24 Mars 2009 sous le n° 0951894 au nom de la Demanderesse.

Reprenant l'exemple de la figure 1, les deux filtres FILTRE 1 et FILTRE 4 initialement affectés par une seule panne satellite présentent, après correction au moyen du module d'accommodation 6, une solution de navigation saine. Ces deux filtres permettent alors de construire deux tests d'innovation croisée qui vont permettre la détection et l'identification directe des deux satellites en panne.

La présente invention combine ainsi avantageusement les avantages des méthodes proposées dans les demandes de brevet FR 0954849 et FR 0951894, en utilisant la capacité à accommoder l'état de navigation en cas d'une panne satellite de la méthode proposée dans FR 0954849 afin de garantir que l'innovation croisée d'un satellite en panne se base sur un filtre sain (i.e non affecté par la panne). En effet dans une architecture de banc de filtres, deux filtres du banc ne contiennent qu'un seul satellite en panne; en utilisant l'accommodation de l'état proposée dans FR 0954849, on est capable de maintenir ces deux filtres dans un domaine proche de l'état sans panne, ce qui permet de garantir que l'interprétation du test d'innovation croisée proposée dans FR 0951894 puisse donner lieu à l'identification des deux satellites en pannes.

On relèvera que l'invention n'est pas limitée à la détection et l'exclusion de deux pannes satellites simultanées, mais s'étend à la détection et l'exclusion de multiples pannes satellites simultanées pour autant que le banc de filtres présente des filtres affectés uniquement par une seule des pannes satellites multiples. Prenant l'exemple de 3 pannes satellites simultanées, on pourra retrouver, dans un banc de filtres composé de filtres secondaires utilisant n-2 mesures GNSS parmi les n mesures disponibles, des filtres secondaires affectés par une seule des 3 pannes. Après accommodation, la solution de navigation fournie par ces filtres sera saine, garantissant l'interprétation du test d'innovation croisée.

On reprend ci-après les méthodes de calcul développées par la Demanderesse et déjà exposées dans la demande de brevet FR 0951894 pour réaliser une détection et exclusion de pannes satellites basée sur les tests d'innovations croisées des satellites non utilisés et les tests d'innovations des satellites utilisés au moment de l'hybridation par chaque filtre du banc de filtres.

Chaque filtre n'utilisant pas un satellite teste l'innovation de ce satellite (appelée innovation croisée) à partir de la position fournie par ce filtre et corrigée suite à l'accommodation. On peut ainsi détecter une panne satellite par le filtre n'utilisant pas le satellite en panne. L'avantage par rapport aux tests d'innovation classiques est que le filtre qui permet de tester un satellite en panne n'est pas perturbé par la panne.

En effet, le i-ème filtre de Kalman secondaire $9i$ reçoit du système GNSS (via le cas échéant le module de correction 5) les mesures de tous les satellites sauf du i-ème, et élabore ainsi le vecteur d'états $dXi$ de manière indépendante du satellite i, de sorte que ce filtre $9i$ n'est pas perturbé par une éventuelle panne affectant le satellite i.

L'innovation croisée d'un satellite correspond par exemple à l'écart entre la pseudo-distance audit satellite $PR_i$ délivrée par le système de positionnement par satellites et une estimation a posteriori $\hat{PR}_i$ de cette pseudo-distance fournie par un filtre de Kalman accommodée (c'est à dire dont la solution de navigation hydride a été corrigée via le module d'accommodation en fonction d'une estimation de l'impact d'une panne du satellite sur la solution de navigation hybride) n'utilisant pas la pseudo-distance délivrée par le satellite, de sorte que cette estimation $\hat{PR}_i$ est indépendant

du satellite que l'on souhaite tester. Le résultat du test ne sera donc pas perturbé par une panne, et notamment par une panne lente, du satellite.

On précise ici que l'innovation croisée peut d'une manière générale être appliquée à n'importe quelle mesure brute, par exemple à une mesure de pseudo-vitesse (également appelée mesure doppler).

Revenant à l'exemple d'une innovation croisée appliquée à une pseudo-distance, on note Inno$_i$ l'innovation croisée du satellite d'indice i :

$$\text{Inno}_i = PR_i - \hat{P}R_i = \text{H}(X_i) - \text{H}(\hat{X}_i),$$

où

- H correspond au modèle d'observation du filtre de Kalman,
- $X_i$ correspond à la position réelle, non connue, du porteur
- $\hat{X}_i$ correspond à la position du porteur telle qu'estimée par le i-ème filtre de Kalman secondaire 9i après accommodation.

En linéarisant l'équation précédente par développement de la matrice d'observation H au premier ordre : Inno$_i$ = $\dot{H}(\hat{X}_i).(X_i - \hat{X}_i)$, où $\dot{H}$ désigne la dérivée au premier ordre de H.

La statistique de l'erreur $(X_i - \hat{X}_i)$ sur la position étant connue de par le filtre de Kalman (elle est notée Pi ci-après), le test statistique consiste par exemple à confronter l'innovation croisée à un seuil dépendant de sa covariance et pris égal à $(H.P_i.H^T + R_i)^*\alpha$, où H représente la matrice d'observation du filtre de Kalman, Pi la matrice d'estimation a posteriori de la covariance de l'erreur, Ri la matrice de covariance du bruit de mesure, et $\alpha$ un coefficient dont la valeur est fixée en fonction de la probabilité de fausse détection.

Un satellite est alors déclaré comme étant défaillant lorsque son innovation croisée excède le seuil présenté ci-dessus. Reprenant l'exemple de la figure 1 (pannes simultanées affectant les satellites 1 et 4), on retiendra à ce propos que les innovations croisées élaborées pour les satellites 1 et 4 affectés par une panne divergent plus vite que les innovations croisées élaborées pour les satellites 2 et 3 non affectés par une panne.

Afin de réaliser la fonction d'exclusion, le module 7 peut en outre être configuré pour :

- invalider un satellite déclaré comme étant défaillant pour que les mesures brutes dudit satellite défaillant ne soient plus utilisées par les filtres du banc,
- exclure le satellite invalidé si à l'expiration d'un délai prédéterminé TE suite à l'invalidation le test statistique de l'innovation croisée dudit satellite conclut toujours à la défaillance dudit satellite, et qu'aucun autre test d'innovation croisée n'a signalé la défaillance d'un autre satellite.

Ainsi, lorsque qu'un satellite est détecté comme étant en panne, on continue à surveiller ce satellite pendant un temps TE. Ce satellite, d'indice i par exemple, ne sera plus utilisé par tous les filtres mais continuera à être testé par le filtre 9i qui ne l'hybride pas via le test d'innovation croisée (le fait d'invalider le satellite suspect ne modifie effectivement en rien le fonctionnement du filtre 9i n'utilisant pas ce satellite). L'avantage d'invalider le satellite suspect pendant le procédé d'exclusion est que s'il n'y a pas d'ambigüité sur le choix du satellite à exclure, il sera de fait exclu dès le début de TE (au moment de la détection). Ainsi, la valeur de la durée TE n'influe pas dans la majorité des cas sur les performances du dispositif d'hybridation.

Selon un mode de réalisation possible, en cas de déclaration de défaillance d'un nouveau satellite au cours du délai TE, on valide le satellite anciennement invalidé de sorte que ces données brutes soient à nouveau utilisées par les filtres du banc, et on invalide le nouveau satellite défaillant. On réalise ainsi un changement de satellite suspect lorsque malgré l'invalidation du premier satellite, une autre innovation croisée dépasse le seuil (ce qui n'est pas censé arriver dans l'hypothèse où le premier satellite était réellement celui en panne).

Selon un autre mode de réalisation possible, on réalise également, pour chaque filtre du banc, un test statistique de l'innovation a priori de chacun des satellites utilisés par le filtre. Il s'agit par exemple de réaliser un test gaussien des innovations (contraint par une probabilité $\beta$) pour les satellites utilisés par chaque filtre.

Ces tests d'innovations dits classiques peuvent aider à choisir le filtre n'utilisant pas le satellite défaillant lorsque plusieurs innovations croisées dépassent un seuil. En effet, il peut arriver qu'une défaillance d'un satellite perturbe suffisamment la position d'un ou plusieurs filtres l'utilisant pour que leurs innovations croisées dépassent également ce seuil. Il faut alors invalider le bon satellite parmi plusieurs possibles. Dans ce mode de réalisation, le choix du satellite à invalider est facilité par la prise en compte des tests d'innovations classiques qui permettent d'évaluer la pertinence de chacun des filtres. Le filtre le plus fiable sera celui qui a le plus grand nombre d'innovations classiques inférieures au seuil.

Ainsi, dans le cas où plusieurs satellites sont déclarés comme étant défaillants suite au test statistique de leur innovation croisée, on invalide le satellite non utilisé par le filtre ayant le plus grand nombre d'innovations a priori dont le test statistique est inférieur à un seuil de sorte que la mesure brute dudit satellite invalidé ne soit plus utilisée par les filtres du banc.

Il peut également arriver que plusieurs satellites soient déclarés comme étant défaillants suite au test statistique de leur innovation croisée et qu'il existe plusieurs filtres n'utilisant pas ces satellites ayant le même plus grand nombre d'innovations à priori dont le test statistique est inférieur à un seuil.

Dans ce cas, le choix du satellite défaillant à invalider peut alors fait en considérant le satellite donnant l'innovation croisée normalisée la plus grande en valeur absolue, en venant fournir les résultats des tests d'innovations croisées au module 53 de gestion des signaux satellites. Alternativement, et comme également représenté sur la figure 2, ce choix peut également être réalisé par le module 53 de gestion des signaux satellites en venant exploiter les résultats des tests élaborés par le module de détection 52.

Selon un autre aspect de l'invention, en cas de déclaration de défaillance d'un satellite, on peut réaliser une réinitialisation partielle des filtres du banc utilisant le satellite exclu, notamment en réinitialisant les états liés aux mesures reçues du système GNSS et les états liés aux autres senseurs utilisés (tels que le baromètre), et en désensibilisant les états affectés par la panne par ajout de bruit d'état, ceci afin de faire reconverger les filtres concernés vers une solution saine si le satellite détecté comme étant défaillant est effectivement le satellite en panne.

On notera que ce type de réinitialisation peut être réalisé lors de la déclaration de défaillance d'un satellite, ou lors d'un changement d'identification du satellite défaillant durant la durée TE.

Alternativement la réinitialisation des filtres du banc peut s'opérer par l'intermédiaire du module d'accommodation 6 qui vient alors corriger l'impact d'une panne déclarée en utilisant pour ce faire les résultats des tests d'innovations croisées élaborés par le module 7 de détection de pannes satellites, ces résultats de tests étant pour ce faire rebouclés au module 51 de sélection d'innovations comme représenté sur la figure 2.

L'invention présente notamment les avantages suivants.

Le banc de filtres présente une architecture conventionnelle : il n'est pas nécessaire de rajouter un banc supplémentaire de filtres pour pouvoir identifier deux pannes satellites simultanées.

Un seul filtre est utilisé pour intégrer les mesures de plusieurs constellations GNSS.

L'utilisation des tests d'innovations croisées permet l'identification directe des satellites en panne.

L'accommodation permet la suppression de la pollution de l'état de navigation sans réinitialisation complète du banc de filtres.

## Revendications

1. Procédé de contrôle d'intégrité d'informations de position délivrées par un dispositif (1) de positionnement par satellites (GNSS) comprenant un banc (3) de filtres de Kalman élaborant chacun une solution de navigation (dX0, dXi, dXn) à partir de mesures brutes de signaux émis par des satellites, **caractérisé en ce qu'**il comporte les étapes consistant, pour chaque filtre du banc, à :

   - (i) déterminer, pour chaque satellite, au moins un rapport (Ir, Ir') de vraisemblance entre une hypothèse de panne d'une nature donnée du satellite et une hypothèse d'absence de panne du satellite,
   comparer le rapport de vraisemblance (Ir, Ir') associé à une panne de nature donnée à une valeur seuil, et déclarer le cas échéant une panne de nature donnée ;
   estimer l'impact de la panne déclarée sur la solution de navigation élaborée par le filtre,
   corriger la solution de navigation élaborée par le filtre en fonction de l'estimation de l'impact de la panne ;
   - (ii) calculer une innovation croisée reflétant l'écart entre une observation correspondant à une mesure brute issue d'un satellite non utilisée par le filtre et une estimation a posteriori de ladite observation issue de la solution de navigation élaborée par le filtre et corrigée conformément à l'étape (i) ;
   - (iii) réaliser un test statistique de l'innovation croisée pour déclarer si le satellite dont la mesure brute n'est pas utilisée par le filtre est ou non défaillant.

2. Procédé selon la revendication 1, comprenant le calcul, pour chaque satellite, d'une innovation croisée et d'une covariance d'innovation croisée reflétant l'écart entre une observation correspondant à une mesure brute issue du satellite et une estimation a posteriori de ladite observation élaborée par un filtre de Kalman n'utilisant pas la mesure brute issue du satellite, le rapport (Ir, Ir') de vraisemblance étant déterminé en fonction de l'innovation croisée et de la covariance d'innovation croisée fournies par ledit filtre de Kalman n'utilisant pas la mesure brute issue du satellite et à partir d'une estimation de l'impact de la panne de nature donnée sur ladite innovation croisée.

**3.** Procédé selon la revendication 2, dans lequel l'impact de la panne de nature donnée sur ladite innovation croisée est estimé par détermination, à partir de données fournies par ledit filtre de Kalman n'utilisant pas la mesure brute issue du satellite, d'une matrice dynamique d'innovation, et par estimation d'une amplitude de la panne de nature donnée sur une fenêtre glissante d'estimation correspondant à un nombre donné (N) d'incrémentations dudit filtre de Kalman n'utilisant pas la mesure brute issue du satellite, la matrice dynamique d'innovation représentant un lien entre l'amplitude de la panne et l'écart induit par la panne sur l'innovation croisée.

**4.** Procédé selon l'une des revendications 1 à 3, dans lequel l'impact d'une panne sur une solution de navigation est estimé par détermination, à partir de données fournies par le filtre de Kalman élaborant la solution de navigation, d'une matrice dynamique de navigation, et par estimation d'une amplitude et d'une covariance de la panne sur une fenêtre glissante d'estimation correspondant à un nombre donné d'incrémentations dudit filtre de Kalman élaborant la solution de navigation, la matrice dynamique de navigation représentant un lien entre l'amplitude de la panne et l'écart induit par la panne sur ladite solution de navigation.

**5.** Procédé selon l'une des revendications 1 à 4, dans lequel le test statistique réalisé à l'étape (iii) déclare un satellite comme étant défaillant lorsque l'innovation croisée excède un seuil correspondant à $(H.P_i.H^T + R_i)*\alpha$, où H représente la matrice d'observation du filtre de Kalman, $P_i$ la matrice d'estimation a posteriori de la covariance de l'erreur, $R_i$ la matrice de covariance du bruit de mesure, et $\alpha$ un coefficient dont la valeur est fixée en fonction d'une probabilité de fausse détection.

**6.** Procédé selon l'une des revendications 1 à 5, dans lequel l'innovation croisée correspond à l'écart entre la pseudo-distance à un satellite délivrée par le système de positionnement par satellites et une estimation a posteriori de cette pseudo-distance fournie par un filtre de Kalman n'utilisant pas la pseudo-distance délivrée par le satellite.

**7.** Procédé selon l'une des revendications 1 à 6, comprenant en outre les étapes consistant à :

- invalider un satellite déclaré comme étant défaillant pour que les mesures brutes dudit satellite défaillant ne soient plus utilisées par les filtres du banc,
- exclure le satellite invalidé si à l'expiration d'un délai prédéterminé suite à l'invalidation le test statistique de l'innovation croisée conclut toujours à la défaillance dudit satellite et aucun autre test d'innovation croisée n'a déclaré la défaillance d'un autre satellite.

**8.** Procédé selon l'une des revendications 1 à 7, mettant également en oeuvre, pour chaque filtre du banc, un test statistique de l'innovation a priori de chacun des satellites utilisés par le filtre, et dans lequel dans le cas où plusieurs satellites sont déclarés comme étant défaillants suite au test statistique de leur innovation croisée, on invalide le satellite non utilisé par le filtre ayant le plus grand nombre d'innovations a priori dont le test statistique est inférieur à un seuil de sorte que la mesure brute dudit satellite invalidé ne soit plus utilisée par les filtres du banc.

**9.** Procédé selon l'une des revendications précédentes, dans lequel chacun des filtres du banc élabore une solution de navigation en venant hybrider des mesures inertielles aux mesures brutes des signaux émis par les satellites.

**10.** Dispositif de positionnement par satellites comprenant un banc (3) de filtres de Kalman élaborant chacun une solution de navigation à partir de mesures brutes de signaux émis par des satellites, **caractérisé en ce qu'**il comporte :

- un module (5) de correction de l'état de navigation configuré pour
déterminer, pour chaque satellite, au moins un rapport (Ir, Ir') de vraisemblance entre une hypothèse de panne d'une nature donnée du satellite et une hypothèse d'absence de panne du satellite,
comparer le rapport de vraisemblance (Ir, Ir') associé à une panne de nature donnée à une valeur seuil, et déclarer le cas échéant une panne de nature donnée ;
- un module (6) d'accommodation configuré pour estimer, pour chaque filtre du banc, l'impact de la panne d'un satellite sur la solution de navigation élaborée par le filtre, et à corriger, en cas de déclaration de panne, la solution de navigation en fonction de l'estimation de l'impact de la panne ;
- un module (7) de détection de pannes satellites configuré pour

◦ calculer, pour chaque filtre du banc, une innovation croisée reflétant l'écart entre une observation correspondant à une mesure brute issue d'un satellite non utilisée par le filtre et une estimation a posteriori de ladite observation issue de la solution de navigation élaborée par le filtre de Kalman telle que corrigée par le module d'accommodation, et

∘ réaliser un test statistique de l'innovation croisée pour déclarer si le satellite est ou non défaillant.

**Patentansprüche**

1.  Verfahren zur Überwachung der Integrität von Positionsangaben, die von einem Satelliten- (GNSS-) Navigationsgerät (1) geliefert werden, das eine Bank (3) von Kalman-Filtern umfasst, wovon jedes aus Rohmesswerten von Signalen, die von Satelliten ausgesendet werden, eine Navigationslösung (dX0, dXi, dXn) gewinnt, **dadurch gekennzeichnet, dass** es für jedes Filter der Bank die folgenden Schritte umfasst:

    - (i) Bestimmen, für jeden Satelliten, mindestens eines Wahrscheinlichkeits-Verhältnisses (Ir, Ir') zwischen einer Hypothese eines Ausfalls bestimmter Art des Satelliten und einer Hypothese eines Nichtvorliegens eines Ausfalls des Satelliten, Vergleichen des zu einem Ausfall bestimmter Art gehörenden Wahrscheinlichkeits-Verhältnisses (Ir, Ir') mit einem Schwellenwert und ggf. Anzeigen eines Ausfalls bestimmter Art;
    Schätzen der Auswirkungen des angezeigten Ausfalls auf die von dem Filter gewonnene Navigationslösung, Korrigieren der von dem Filter gewonnenen Navigationslösung in Abhängigkeit von der Schätzung der Auswirkungen des Ausfalls;
    - (ii) Berechnen einer Kreuz-Innovation, die den Abstand zwischen einer Beobachtung, die einem Rohmesswert entspricht, der von einem von dem Filter nicht verwendeten Satelliten stammt, und einer a-posteriori-Schätzung der Beobachtung, die aus der von dem Filter gewonnenen und gemäß dem Schritt (i) korrigierten Navigationslösung hervorgegangen ist, widerspiegelt;
    - (iii) Durchführen eines statistischen Tests der Kreuz-Innovation, der anzeigt, ob der Satellit, dessen Rohmesswert von dem Filter nicht verwendet wird, ausgefallen ist.

2.  Verfahren nach Anspruch 1, das für jeden Satelliten die Berechnung einer Kreuz-Innovation und einer Kreuz-Innovation-Kovarianz umfasst, die den Abstand zwischen einer Beobachtung, die einem Rohmesswert entspricht, der von dem Satelliten stammt, und einer a-posteriori-Schätzung der Beobachtung, die von einem Kalman-Filter gewonnen wird, das nicht den von dem Satelliten stammenden Rohmesswert verwendet, widerspiegeln, wobei das Wahrscheinlichkeits-Verhältnis (Ir, Ir') in Abhängigkeit von der Kreuz-Innovation und der Kreuz-Innovation-Kovarianz, die von dem Kalman-Filter geliefert werden, das nicht den von dem Satelliten stammenden Rohmesswert verwendet, und ausgehend von einer Schätzung der Auswirkungen des Ausfalls bestimmter Art auf die Kreuz-Innovation bestimmt wird.

3.  Verfahren nach Anspruch 2, wobei die Auswirkungen des Ausfalls bestimmter Art auf die Kreuz-Innovation durch Bestimmen, anhand der Daten, die von dem Kalman-Filter geliefert werden, das nicht den von dem Satelliten stammenden Rohmesswert verwendet, einer dynamischen Innovationsmatrix und durch Schätzen eines Ausmaßes des Ausfalls bestimmter Art über ein gleitendes Schätzfenster, das einer vorgegebenen Anzahl (N) Inkrementierungen des Kalman-Filters entspricht, das nicht den von dem Satelliten stammenden Rohmesswert verwendet, geschätzt werden, wobei die dynamische Innovationsmatrix einen Zusammenhang zwischen dem Ausmaß des Ausfalls und der durch den Ausfall an der Kreuz-Innovation hervorgerufenen Abweichung repräsentiert.

4.  Verfahren nach einem der Ansprüche 1 bis 3, wobei die Auswirkungen eines Ausfalls auf eine Navigationslösung geschätzt werden und zwar durch Bestimmen, anhand der Daten, die von dem Kalman-Filter geliefert werden, das die Navigationslösung gewinnt, einer dynamischen Navigationsmatrix und durch Schätzen eines Ausmaßes und einer Kovarianz des Ausfalls über ein gleitendes Schätzfenster, das einer vorgegebenen Anzahl Inkrementierungen des Kalman-Filters entspricht, das die Navigationslösung gewinnt, wobei die dynamische Navigationsmatrix einen Zusammenhang zwischen dem Ausmaß des Ausfalls und der durch den Ausfall an der Navigationslösung hervorgerufenen Abweichung repräsentiert.

5.  Verfahren nach einem der Ansprüche 1 bis 4, wobei der im Schritt (iii) durchgeführte statistische Test einen Satelliten als ausgefallen anzeigt, wenn die Kreuz-Innovation eine Schwelle überschreitet, die $(H \cdot P_i \cdot H^T + R_i)^* \alpha$ entspricht, wobei H für die Beobachtungsmatrix des Kalman-Filters, $P_i$ für die a-posteriori-Schätzmatrix der Kovarianz des Fehlers, $R_i$ für die Kovarianzmatrix des Messrauschens und $\alpha$ für einen Koeffizienten steht, dessen Wert in Abhängigkeit von der Wahrscheinlichkeit einer falschen Detektion festgelegt ist.

6.  Verfahren nach einem der Ansprüche 1 bis 5, wobei die Kreuz-Innovation dem Abstand zwischen der Pseudo-Entfernung zu einem Satelliten, die von dem Satellitennavigationssystem geliefert wird, und einer a-posteriori-Schätzung dieser Pseudo-Entfernung, die von einem Kalman-Filter geliefert wird, das die von dem Satelliten gelieferte Pseudo-Entfernung nicht verwendet, entspricht.

7. Verfahren nach einem der Ansprüche 1 bis 6, das außerdem die folgenden Schritte umfasst:

   - Sperren eines als ausgefallen angezeigten Satelliten, damit die Rohmesswerte des ausgefallenen Satelliten von den Filtern der Bank nicht mehr verwendet werden,
   - Ausschließen des gesperrten Satelliten, wenn nach Ablauf einer vorgegebenen Frist nach dem Sperren der statistische Test der Kreuz-Innovation immer noch auf den Ausfall des Satelliten hindeutet und kein anderer Kreuz-Innovation-Test den Ausfall eines anderen Satelliten angezeigt hat.

8. Verfahren nach einem der Ansprüche 1 bis 7, wobei außerdem für jedes Filter der Bank ein statistischer Test der a-priori-Innovation eines jeden von dem Filter verwendeten Satelliten durchgeführt wird und wobei in dem Fall, in dem mehrere Satelliten infolge des statistischen Tests ihrer Kreuz-Innovation als ausgefallen angezeigt werden, der von dem Filter nicht verwendete Satellit mit der größten Anzahl a-priori-Innovationen, dessen statistischer Test unter einem Schwellenwert liegt, gesperrt wird, so dass der Rohmesswert des gesperrten Satelliten von den Filtern der Bank nicht mehr verwendet wird.

9. Verfahren nach einem der vorhergehenden Ansprüche, wobei jedes der Filter der Bank eine Navigationslösung gewinnt, indem es Messwerte von einem inertialen System mit Rohmesswerten von Signalen, die von Satelliten ausgesendet werden, hybridisiert.

10. Satellitennavigationsgerät, das eine Bank (3) von Kalman-Filtern umfasst, wovon jedes aus Rohmesswerten von Signalen, die von Satelliten ausgesendet werden, eine Navigationslösung gewinnt, **dadurch gekennzeichnet, dass** es Folgendes umfasst:

   - ein Navigationszustand-Korrekturmodul (5), das dafür konfiguriert ist, dass es
   für jeden Satelliten mindestens ein Wahrscheinlichkeits-Verhältnis (lr, lr') zwischen einer Hypothese eines Ausfalls bestimmter Art des Satelliten und einer Hypothese eines Nichtvorliegens eines Satellitenausfalls bestimmt,
   das einem Ausfall bestimmter Art zugeordnete Wahrscheinlichkeits-Verhältnis (lr, lr') mit einem Schwellenwert vergleicht und ggf. einen Ausfall bestimmter Art anzeigt;
   - ein Anpassungsmodul (6), das dafür konfiguriert ist, dass es für jedes Filter der Bank die Auswirkungen des Ausfalls eines Satelliten auf die von dem Filter gewonnene Navigationslösung schätzt und im Falle einer Ausfallsanzeige die Navigationslösung in Abhängigkeit von der Schätzung der Auswirkungen des Ausfalls korrigiert;
   - ein Satellitenausfall-Detektionsmodul (7), das dafür konfiguriert ist, dass es für jedes Filter der Bank

      ◦ eine Kreuz-Innovation berechnet, die den Abstand zwischen einer Beobachtung, die einem Rohmesswert entspricht, der von einem von dem Filter nicht verwendeten Satelliten stammt, und einer a-posteriori-Schätzung der Beobachtung, die aus der von dem Kalman-Filter gewonnenen und vom Anpassungsmodul korrigierten Navigationslösung hervorgegangen ist, widerspiegelt, und
      ◦ einen statistischen Test der Kreuz-Innovation durchführt, der anzeigt, ob der Satellit ausgefallen ist.

## Claims

1. A method for checking the integrity of pieces of position information delivered by a satellite positioning device (1) (GNSS) comprising a bank (3) of Kalman filters each elaborating a navigation solution (dX0 dXi, dXn) from raw measurements of signals transmitted by satellites, **characterized in that** for each filter of the bank, it includes the steps of:

   - (i) determining for each satellite at least one likelihood ratio (lr, lr') between an assumption of a failure of a given nature of the satellite and an assumption of absence of failure of the satellite;
   comparing the likelihood ratio (lr, lr') associated with a failure of given nature with a threshold value, and if required declaring a failure of a given nature;
   estimating the impact of the declared failure on the navigation solution elaborated by the filter;
   correcting the navigation solution elaborated by the filter according to the estimate of the impact of the failure;
   - (ii) calculating a cross-innovation reflecting the deviation between an observation corresponding to a raw measurement from a satellite not used by the filter and an *a posteriori* estimate of said observation from the navigation solution elaborated by the filter and corrected according to step (i);

- (iii) conducting a statistical test of the cross-innovation in order to declare whether the satellite, for which the raw measurement is not used by the filter, is faulty or not.

2. The method according to claim 1, comprising the calculation for each satellite of a cross-innovation and of a cross-innovation covariance reflecting the deviation between an observation corresponding to a raw measurement from the satellite and an *a posteriori* estimate of said observation elaborated by a Kalman filter not using the raw measurement from the satellite, the likelihood ratio (lr, lr') being determined according to the cross-innovation and to the cross-innovation covariance provided by said Kalman filter not using the raw measurement from the satellite and from an estimation of the impact of the failure of a given nature on said cross-innovation.

3. The method according to claim 2, wherein the impact of the failure of given nature on said cross-innovation is estimated by determining, from data provided by said Kalman filter not using the raw measurement from the satellite, a dynamic innovation matrix, and by estimating an amplitude of the failure of given nature on a sliding estimation window corresponding to a given number (N) of incrementations of said Kalman filter not using the raw measurement from the satellite, the dynamic innovation matrix representing a link between the amplitude of the failure and the deviation induced by the failure on the cross-innovation.

4. The method according to one of claims 1 to 3, wherein the impact of a failure on a navigation solution is estimated by determining, from data provided by the Kalman filter elaborating the navigation solution, a dynamic navigation matrix, and by estimating an amplitude and a covariance of the failure on a sliding estimation window corresponding to a given number of incrementations of said Kalman filter elaborating the navigation solution, the dynamic navigation matrix representing a link between the amplitude of the failure and the deviation induced by the failure on said navigation solution.

5. The method according to one of claims 1 to 4, wherein the statistical test conducted in step (iii) declares a satellite as being faulty when the cross-innovation exceeds a threshold corresponding to $(H.P_i.H^T + R_i)^*\alpha$, wherein H represents the observation matrix of the Kalman filter, $P_i$ the *a posteriori* estimation matrix of the covariance of the error, $R_i$ the covariance matrix of the measurement noise, and $\alpha$ a coefficient for which the value is set according to a false detection probability.

6. The method according to one of claims 1 to 5, wherein the cross-innovation corresponds to the deviation between the pseudo-distance to a satellite delivered by the satellite positioning system and an *a posteriori* estimation of this pseudo-distance provided by a Kalman filter not using the pseudo-distance delivered by the satellite.

7. The method according to one of claims 1 to 6, further comprising the steps consisting of:

- invalidating a satellite declared as being faulty so that the raw measurements of said faulty satellite are no longer used by the filters of the bank,
- excluding the invalidated satellite if upon expiration of a predetermined delay following the invalidation, the statistical test of the cross-innovation still draws the conclusion that said satellite has failed and no other cross-innovation tests has declared the failure of another satellite.

8. The method according to one of claims 1 to 7, also applying, for each filter or bank, a statistical test of the *a priori* innovation of each of the satellites used by the filter, and wherein in the case when several satellites are declared as being faulty following the statistical test of their cross-innovation, the satellite not used by the filter having the largest number of a priori innovations, for which the statistical test is below a threshold, is invalidated, so that the raw measurement of said invalidated satellite is no longer used by the filters of the bank.

9. The method according to one of the preceding claims, wherein each of the filters of the bank elaborates a navigation solution by hybridizing inertial measurements to raw measurements of the signals transmitted by the satellites.

10. A satellite positioning device comprising a bank (3) of Kalman filters each elaborating a navigation solution from raw measurements of signals transmitted by satellites, **characterized in that** it includes:

- a module (5) for correcting the navigation state configured for
determining for each satellite at least one likelihood ratio (lr, lr') between an assumption of a failure of a given nature of the satellite and an assumption of absence of failure of the satellite;

comparing the likelihood ratio (lr, lr') associated with a failure of given nature with a threshold value, and if required declaring a failure of a given nature;

- an accommodation module (6) for estimating, for each filter of the bank, the impact of a failure of a satellite on the navigation solution elaborated by the filter, and correcting, in the case of declaration of failure, the navigation solution according to the estimate of the impact of the failure;

- a module (7) for detecting satellite failures configured for

   ◦ calculating, for each filter of the bank, a cross-innovation reflecting the deviation between an observation corresponding to a raw measurement from a satellite not used by the filter and an *a posteriori* estimate of said observation from the navigation solution elaborated by the Kalman filter as corrected by the accommodation module, and

   ◦ conducting a statistical text of the cross-innovation in order to declare whether the satellite is faulty or not.

**FIG. 1**

EP 2 614 385 B1

FIG. 2

NAVIGATION OPTIMALE

NAVIGATION DE REFERENCE

GNSS p   GNSS j   GNSS   GNSS 1

UMI

PPVI

Xref

dc

1/Z

dXo   dXi   dXn

dXn dXi dXo

51   52   6   10   7   4

8   9i   9n

53   5   3   2   11   1

## RÉFÉRENCES CITÉES DANS LA DESCRIPTION

### Documents brevets cités dans la description

- EP 1801539 A1
- EP 1801539 A
- WO 2010070012 A
- FR 0954849
- FR 0951894